# EUROPÄISCHE PATENTSCHRIFT

(11) **EP 0 533 720 B1**
(45) Veröffentlichungstag und Bekanntmachung des Hinweises auf die Patenterteilung: **24.08.1994**
(21) Anmeldenummer: 91910539.5
(22) Anmeldetag: 11.06.1991
(51) Int. Cl.: F16H 61/00, F16H 9/16

(54) **ANTRIEBSVORRICHTUNG**
DRIVE DEVICE
DISPOSITIF D'ENTRAINEMENT

(30) Priorität: 13.06.1990 DE 4018938
(43) Veröffentlichungstag der Anmeldung: 31.03.1993
(73) Patentinhaber: ZF FRIEDRICHSHAFEN AG, 88046 Friedrichshafen (DE)
(72) Erfinder: WINKELMANN, Siegfried, D-7992 Tettnang (DE); RÖGNER, Horst, D-7990 Friedrichshafen 5 (DE)
(74) Vertreter: Raue, Reimund
(86) Internationale Anmeldenummer: EP9101085
(87) Internationale Veröffentlichungsnummer: WO9119918

(56) Entgegenhaltungen:
- DE-A- 2 118 083
- DE-B- 1 284 779
- FR-A- 2 546 257
- GB-A- 0 815 416
- GB-A- 2 036 204
- US-A- 3 478 611

## Beschreibung

Die Erfindung betrifft eine Antriebsvorrichtung zur Übertragung von Drehmoment zwischen einer Antriebswelle mit einer ersten Riemenscheibe und einer angetriebenen Welle mit einer zweiten Riemenscheibe. Die erste Riemenscheibe weist einen axial feststehenden, mit der Antriebswelle drehfest verbundenen Flansch und einen axial beweglichen, unter der Wirkung einer Vorspanneinrichtung stehenden Flansch auf. Die zweite Riemenscheibe ist aus einem axial feststehenden, mit der angetriebenen Welle drehfest verbundenen und einem axial beweglichen Flansch zusammengesetzt, wobei der axial bewegliche Flansch mit einem Flansch der angetriebenen Welle eine Kammer bildet, die an einen Vorratsbehälter eines Hydraulikmediums angeschlossen ist und mit einem Stützdruck, der in Abängigkeit eines Kennfeldes eines Verbrennungsmotors regelbar ist, beaufschlagbar ist.

Eine wie vorstehend geschildert aufgebaute Antriebsvorrichtung findet insbesondere beim Antrieb von Nebenaggregaten in Kraftfahrzeugen Verwendung. Hier kann es sich beispielsweise um einen Generator, einen Klimakompressor oder einen Ladeluftverdichter handeln. Beim Antrieb von Nebenaggregaten stellt sich allgemein das Problem, eine genügend große Antriebsdrehzahl auch bei niedrigen Motordrehzahlen zu erreichen; andererseits sollen diese Drehzahlen im oberen Bereich der Motordrehzahlen nicht zu hoch werden. Dieser Forderung läßt sich mit dem Einsatz einer Antriebsvorrichtung mit einer nicht-linearen Kennlinie Rechnung tragen. Unter Kennlinie ist hierbei das Verhältnis der Drehzahlen der treibenden und der getriebenen Welle der Antriebsvorrichtung zu verstehen. Um die Kennlinie für den gesteuerten Antrieb eines Nebenaggregates zu verändern, ist die Verwendung von Fliehgewichten bekanntgeworden (DE-A-3242 448). Mit derartigen Reglergewichten läßt sich eine Anpassung im erläuterten Sinne zwar erreichen, jedoch unterliegt die Reproduzierbarkeit der Drehzahlverhältnisse von angetriebener zu getriebener Welle der Antriebsvorrichtung großen Streuungen.

Es ist ferner bekanntgeworden, die Stellung der Flansche der Riemenscheiben hydraulisch einzustellen (DE-A-2118 083, DE-A2560 653). Damit die auf die Riemenscheiben einwirkenden Drücke nicht drehzahlabhängig durch die Zentrifugalkraft verfälscht werden, wurden besondere Vorkehrungen zur Kompensierung des Einflusses der Zentrifugalkraft auf das Hydraulikmedium getroffen.

Bei der Konstruktion nach der DE-A-3830 165 wird die Stellung der festen und axial beweglichen Riemenscheibe zueinander zum einen durch eine Vorspanneinrichtung und zum anderen durch eine abhängig von der Zentrifugalkraft wirksame Einrichtung bestimmt. Die in Abhbängigkeit von der Zentrifugalkraft wirksame Einrichtung besteht aus kleinen Elementen, z. B. pulverförmigem Stahl, Kupfer usw. Diese Einrichtung sorgt dafür, daß die Kraft der Vorspanneinrichtung mit zunehmenden Drehzahlen vermindert wird. Der Abstand, den die beiden Riemenscheiben zueinander einnehmen, wird demzufolge, mit anderen Worten ausgedrückt, mit zunehmenden Drehzahlen wieder vergrößert, d. h., die Riemenscheibe wird geöffnet. Dies hat eine Reduzierung der Drehzahl der angetriebenen Welle zur Folge.

Die CVT-Antriebsvorrichtung, die aus der FR-A-2546 257 bekannt ist, weist einen axial feststehenden Flansch auf der Ausgangswelle auf. Der axial bewegliche Flansch ist Bestandteil einer Kammer, die mit einem Hydraulikmedium beaufschlagt wird. Die Kammer ist an einen Vorratsbehälter angeschlossen. Durch die Zentrifugalkraft des Hydraulikmediums wird der resultierende Druck in der Kammer verändert. Da die Kammer die Steuerungseinrichtung bildet, ist die Übersetzung des Getriebes von der Drehzahl abhängig.

Der vorliegenden Erfindung liegt, ausgehend von der Anordnung nach der FR-A-2546 257, die Aufgabe zugrunde, eine Antriebsvorrichtung, insbesondere für den Antrieb von Nebenaggregaten eines Kraftfahrzeugs, dahingehend zu verbessern, daß die Drehzahlen der Antriebsvorrichtung in weiten Grenzen präzise steuerbar sind.

Die Erfindung löst die gestellte Aufgabe dadurch, daß die kennfeldabhängige Motordrehzahl und/oder der Ladedruck des Verbrennungsmotors überwacht und das dieser Drehzahl und/oder diesem Druck entsprechende Übersetzungsverhältnis der Antriebsvorrichtung neben der Veränderung der Zentrifugalwirkung des Hydraulikmediums durch Änderung, Zu- und Abschalten des Stützdruckes variiert wird.

Bei der erfindungsgemäßen Antriebsvorrichtung besteht unterhalb einer Grenzdrehzahl ein starres Drehzahlverhältnis mit einer Übersetzung ins Schnelle. Wird eine erste Grenzdrehzahl überschritten, überwiegt der Fliehkrafteinfluß gegenüber der Kraft der Vorspanneinrichtung der ersten Riemenscheibe. Ab hier beginnt der Regelbereich der getriebenen Welle. Wenn der Stellweg der zweiten Riemenscheibe erschöpft ist, liegt wiederum ein festes Drehzahlverhältnis mit einer Übersetzung ins Langsame vor. Der Regelbereich der Antriebsvorrichtung kann dadurch erweitert werden, daß die Kammer mit einem Stützdruck zusätzlich beaufschlagt wird. Mit dem zusätzlichen Stützdruck kann die Antriebsvorrichtung auf einer Kennlinie mit höheren Drehzahlen gefahren werden. Innerhalb dieser Grenzen kann das Übersetzungsverhältnis der Antriebsvorrichtung in der Weise gesteuert werden, daß neben der Veränderung der Zentrifugalwirkung des Hydraulikmediums der Stützdruck variiert, zu- oder abgeschaltet wird, bis eine Soll-Motordrehzahl und/oder ein -Ladedruck gemessen wird.

Die Kammer zur Aufnahme des Hydraulikmediums kann in baulich einfacher Weise dadurch gebildet wrden, daß ein Kolben des axial beweglichen Flansches in einem Innenzylinder des Flansches der angetriebenen Welle gleitend und dicht geführt ist. Diese Bauweise ermöglicht auch eine einfache Anpassung der Regelcharakteristik der Antriebsvorrichtung durch unterschiedlich große Durchmesser des Kolbens. Durch geeignete Wahl der Durchmesser läßt sich das in der Kammer eingeschlossene Hydraulikmedium mengenmäßig leicht variieren.

Bei einem bevorzugten Ausführungsbeispiel der erfindungsgemäßen Antriebsvorrichtung sind im axial beweglichen Flansch und dem Flansch der angetriebenen Welle Halbrundnuten vorgesehen, die sich mit ihren axial gerichteten Öffnungen diametral gegenüberliegen. Die Öffnungen bilden geteilte Hohlkörper, in die Zylinderkörper eingesetzt werden, um eine drehfeste Verbindung zwischen dem axial beweglichen Flansch und dem Flansch der angetriebenen Welle herzustellen. Diese Maßnahme ist aus der DE-A 12 84 779 an sich bekanntgeworden.

Es ist vorteilhaft, die angetriebene Welle als Hohlwelle auszugestalten. Die Hohlwelle kann mit einer Abtriebswelle unmittelbar oder mittelbar über eine schaltbare Kupplung drehfest verbunden sein bzw. werden. Bei der Abtriebswelle kann es sich um die Antriebswelle des Nebenaggregates, beispielsweise eines Luftverdichters, handeln. Die schaltbare Kupplung ist bevorzugt als elektromagnetisch betätigbare Kupplung ausgebildet.

Bei einer einfachen, montagefreundlichen Ausbildung der Kammer ist ein Boden vorgesehen, der mit einer Außendichtung an der Hohlwelle anliegt. Dieser Boden kann mit einer zentrischen Bohrung versehen sein, durch die die Abtriebswelle hindurchgreift. Neben der Außendichtung ist dann eine Innendichtung vorzusehen. Bei dieser Lösung führt die Zufluß- bzw. Abflußleitung durch die Abtriebswelle in die Kammer.

Um die axial bewegliche Riemenscheibe in ihrer der der Scheibe am weitesten geöffneten Stellung exakt zu fixieren, liegt der axial bewegliche Flansch in einer Endlage an einem Anschlag des Flansches der angetriebenen Welle an.

Die Zufluß- bzw. Abflußleitung für das Hydraulikmedium kann auch konzentrisch zum Flansch der angetriebenen Welle angeordnet sein. In diesem Fall ist die Leitung durch eine Bohrung des Flansches der angetriebenen Welle dicht in der Weise geführt, daß sich der Flansch der angetriebenen Welle um die Leitung drehen kann.

Es ist ferner vorteilhaft, den Flansch der angetriebenen Welle als Antriebsscheibe für ein weiteres Nebenagregat auszubilden. Hierbei kann es sich beispielsweise um einen Klimakompressor handeln.

Weitere für die Erfindung wesentliche Merkmale sowie die daraus resultierenden Vorteile sind der nachfolgenden Beschreibung zweier Ausführungsbeispiele der Erfindung zu entnehmen.

Es zeigen:
- Fig. 1: einen Verbrennungsmotor mit einer Antriebsvorrichtung für ein Nebenaggregat eines Kraftfahrzeugs in stark vereinfachter, schematischer Darstellung;
- Fig. 2: eine Riemenscheibe der Antriebsvorrichtung nach Fig. 1 im Längsschnitt;
- Fig. 3: ein weiteres Ausführungsbeispiel einer Riemenscheibe und
- Fig. 4: eine schematische Darstellung der Drehzahlverhältnisse.

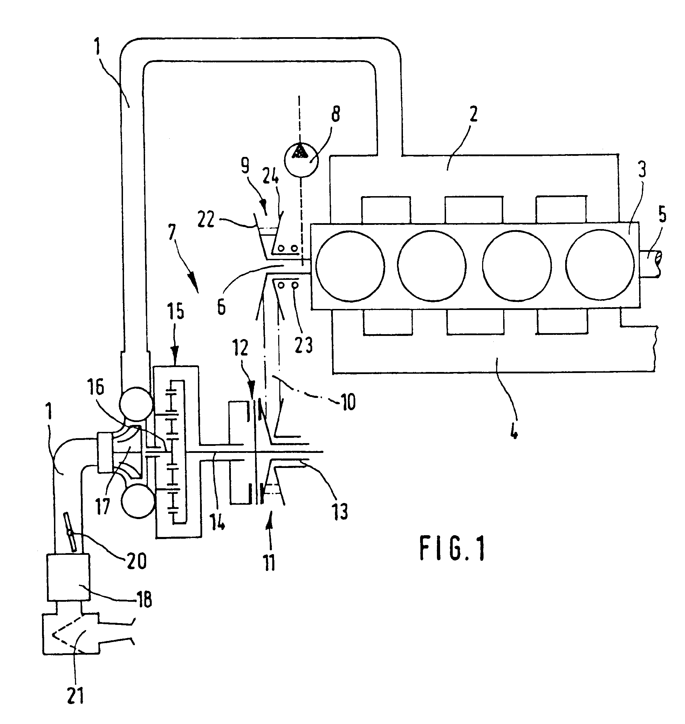

Die schematische Darstellung nach Fig. 1 zeigt eine Antriebsvorrichtung zum Betreiben eines Nebenaggregats in Verbindung mit einem Verbrennungsmotor eines Kraftfahrzeugs.

Eine Ansaugleitung 1 führt zu einem Luftverteiler 2 eines Verbrennungsmotors 3. Bei diesem Verbrennungsmotor handelt es sich um einen Otto-Motor. Die erfindungsgemäße Anordnung kann jedoch prinzipiell auch bei einem Dieselmotor verwirklicht werden. Dem Verbrennungsmotor 3 ist ein Abgassammler 4 zugeordnet.

Eine Abtriebswelle 5 steht mit einem selbst nicht dargestellten Getriebe in treibender Verbindung. Auf der gegenüberliegenden Seite des Verbrennungsmotors befindet sich eine treibende Welle 6 einer Antriebsvorrichtung 7. Von der Welle 6 ist ferner der Antrieb für eine Schmiermittelpumpe 8 abgeleitet. Die Antriebsvorrichtung 7 und die Schmiermittelpumpe 8 kann, wenn dies aus Platzgründen erforderlich ist, auch über eine Zwischenwelle angetrieben werden.

Eine erste Riemenscheibe 9 der Antriebsvorrichtung 7 treibt über einen Riemen 10 eine zweite Riemenscheibe 11 an.

Durch Betätigen einer elektromagnetischen Kupplung 12 wird eine drehfeste Verbindung zwischen der zweiten Riemenscheibe 11 und einer angetriebenen Welle 13 mit einer Abtriebswelle 14 hergestellt. Die Abtriebswelle 14 treibt ein Hochtreiber-Planetengetriebe 15 an. Anstelle eines Planetengetriebes kann zur Erhöhung der Drehzahl auch ein geeignetes Getriebe abweichender Bauart eingesetzt werden. Eine Sonnenradwelle 16 dient zum Antrieb eines Kreiselverdichters 17, der innerhalb der Saugleitung 1 liegt.

Bei Leerlauf und bei niedrigen Motordrehzahlen dreht die zweite Riemenscheibe 11 schneller als die erste Riemenscheibe 9. Bei maximaler Drehzahl des Verbrennungsmotors 3 erreicht das System ein Übersetzungsverhältnis, bei dem die Drehzahl der Abtriebswelle 14 in der Regel kleiner als die Drehzahl des Verbrennungsmotors ist. Da die Ausgangsdrehzahl der zweiten Riemenscheibe 11 für den Betrieb des Kreiselverdichters 17 nicht ausreichen würde, weist das Hochtreiber-Planetengetriebe ein hohes Übersetzungsverhältnis ins Schnelle treibend auf.

In der Ansaugleitung 1 befindet sich ein Luftmengenmesser 18. Eine Drosselklappe 20 ist von ihrer Schließstellung bis zu einem maximalen Öffnungswinkel betätigbar.

Die erste Riemenscheibe 9 der Antriebswelle 6 besteht aus einem axial feststehenden, mit der Antriebswelle 6 drehfest verbundenen Flansch 22 und einem axial beweglichen, unter der Wirkung einer Vorspanneinrichtung 23, z. B. einer Druckfeder, stehenden Flansch 24.

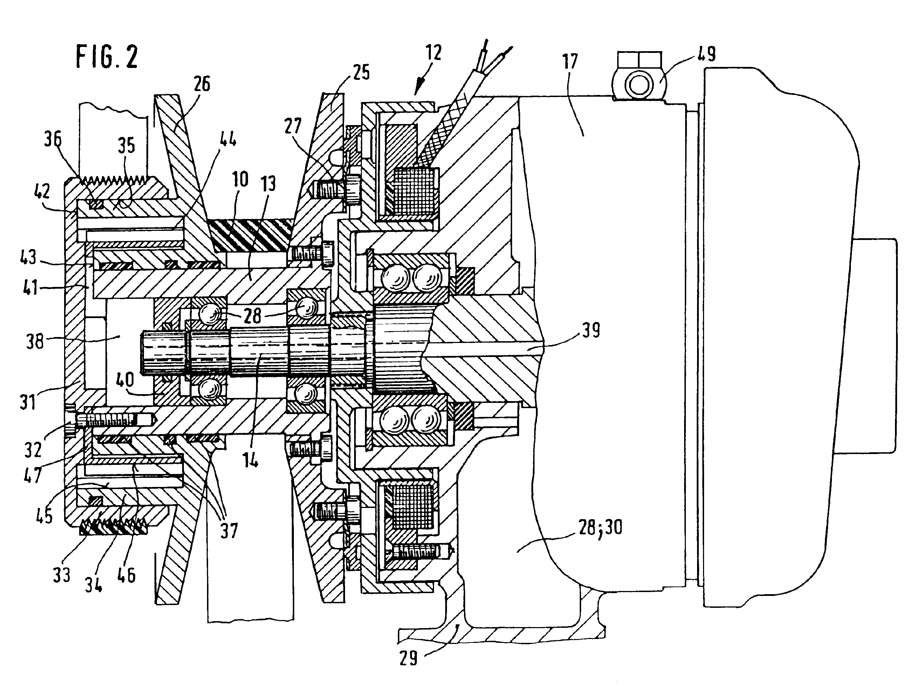

Der konstruktive Aufbau der zweiten Riemenscheibe 11 wird nachfolgend anhand der Fig. 2 erläutert.

Die zweite Riemenscheibe 11 setzt sich aus einem axial feststehenden Flansch 25 und einem axial beweglichen Flansch 26 zusammen. Der axial feststehende Flansch 25 ist mit der angetriebenen Welle 13 durch geeignete Verbindungsmittel, wie z. B. Schrauben 27, drehfest verbunden. Im dargestellten Ausführungsbeispiel ist die angetriebene Welle 13 als Hohlwelle ausgebildet und über zwei Lager 28 auf der Abtriebswelle 14 drehbar angeordnet. Die Kupplung 12 ist als elektromagnetisch betätigbare Kupplung ausgebildet. Bei geschlossener Kupplung 12 wird eine drehfeste Verbindung zwischen dem axial feststehenden Flansch 25 und der Abtriebswelle 14 hergestellt. Die Abtriebswelle 14 treibt, wie bereits erwähnt, das Hochtreiber-Planetengetriebe 15 und dieses wiederum den Kreiselverdichter 17 an.

In der Fig. 2 ist der Kreiselverdichter 17 in seinen Umrissen schematisch dargestellt. Der Innenraum 28 eines Gehäuses 29 ist als Vorratsbehälter 30 für ein Hydraulikmedium vorgesehen. Der Vorratsbehälter kann ohne weiteres auch außerhalb des Gehäuses 29 angeordnet sein.

Dem axial feststehenden Flansch 25 liegt der axial bewegliche Flansch 26 gegenüber.

Die angetriebene Welle 13 weist einen Flansch 31 auf, der mittels Schraubverbindungen 32 mit der angetriebenen Welle 13 drehfest verbunden ist. Anstelle der Schraubverbindungen 32 können auch andere geeignete drehfeste Verbindungen gewählt werden.

Der Flansch 31 der angetriebenen Welle 13 weist einen axial gerichteten Rand 33 auf, der in einen Kolben 34 des axial beweglichen Flansches nach Art eines Deckels übergreift. Der Kolben 34 ist in einem Innenzylinder 35 des Flansches 31 gleitend geführt. Eine Dichtung 36 übernimmt die Abdichtung des Kolbens 34 gegenüber dem Innenzylinder 35.

Es ist vorteilhaft, den Flansch 31 als Antriebsscheibe für ein weiteres Nebenaggregat, z. B. einen Klimakompressor, auszubilden, wie dies in der Zeichnung dargestellt ist.

Der axial bewegliche Flansch 26 stützt sich über Gleit- und Dichtringe 37 auf der angetriebenen Welle 13 ab.

Der Flansch 26 ist, wie bereits erwähnt, gegenüber der angetriebenen Welle 13 axial verschieblich und weist eine drehfeste Verbindung zur angetriebenen Welle 13 auf, um das anteilige Drehmoment zu übertragen, das sich aus der Anlage des Riemens 10 an diesem Flansch 26 ergibt. Die Axialverschiebung und die drehfeste Verbindung des Flansches 26 wird durch die nachstehend erläuterten konstruktiven Maßnahmen erreicht:

Der Flansch 31 ist Bestandteil einer Kammer 38, die zur Aufnahme von Hydraulikmedium vorgesehen ist und zu diesem Zweck über eine Zufluß- bzw. Abflußleitung 39 mit dem Vorratsbehälter 30 verbunden ist. Ein ringförmiger Boden 40, der gegenüber der angetriebenen Welle 13 und der Abtriebswelle 14 abgedichtet ist, bildet die dem Flansch 31 gegenüberliegende Begrenzung der Kammer 38. Über einen radial gerichteten Kanal 41 gelangt das Hydraulikmedium in Kontakt mit der wirksamen Fläche des Kolbens 34 des Flansches 26.

Die drehfeste Verbindung zwischen dem Flansch 26 und dem Flansch 31 der angetriebenen Welle 13 erfolgt über Zylinderkörper 44, von denen zwei in der Zeichnung abgebildet sind. Die Zylinderkörper 44 sind in Halbrundnuten 45 des Flansches 26 und Halbrundnuten 46 des Flansches 31 eingesetzt. Die Halbrundnuten 45 und 46 sind mit ihren axial gerichteten Öffnungen einander zugekehrt, so daß die Aufnahme der Zylinderkörper 44 ohne weiteres möglich ist. Aus Fertigungsgründen sind die Halbrundnuten 46 des Flansches 31 in einem gesonderten Drehteil 47 angeordnet, das beim Verschrauben des Flansches 31 mit der angetriebenen Welle 13 eingefügt wird. Aus der Zeichnung ist in Verbindung mit der vorstehenden Erläuterung ohne weiteres ersichtlich, daß der Flansch 26 gegenüber der angetriebenen Welle 13 eine axiale Verschiebebewegung ausführen kann. Es besteht eine drehfeste Verbindung des Flansches 26 mit der angetriebenen Welle 13. Zur Übertragung des Drehmoments dienen die Zylinderkörper 44.

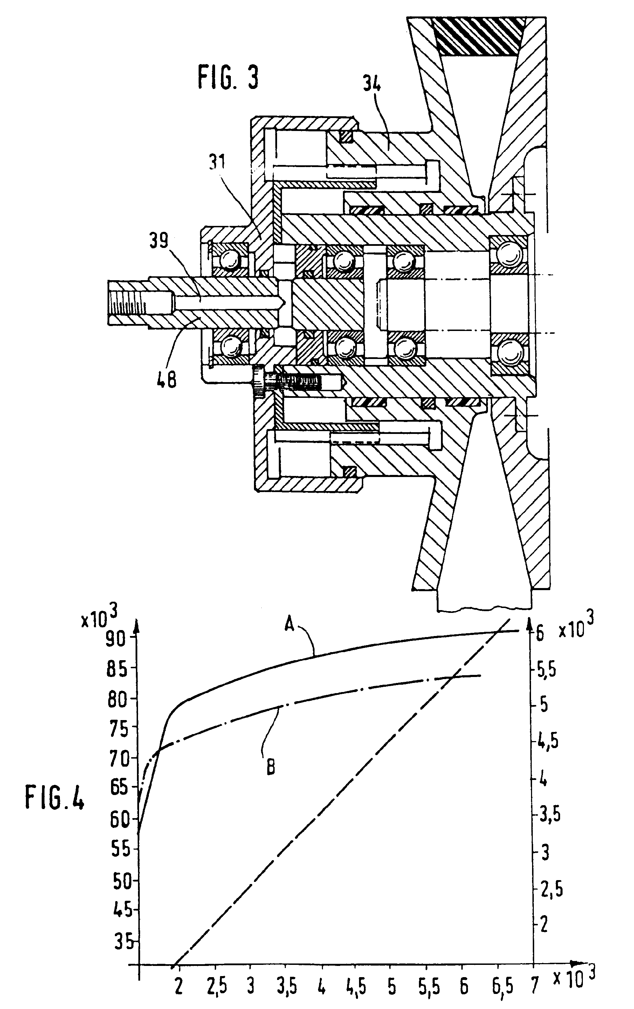

Die in Fig. 3 abgebildete zweite Riemenscheibe entspricht in ihrem prinzipiellen Aufbau der Riemenscheibe nach Fig. 2. Die Zu- bzw. Abflußleitung 39 befindet sich jedoch hiervon abweichend in einem gesonderten Anschlußstück 48. Dieses Anschlußstück 38 ist ortsfest angeordnet und durchsetzt den Flansch 31 konzentrisch, -so daß sich dieser um das Anschlußstück 48 drehen kann. Im übrigen zeigt die Abbildung entsprechend Fig. 3 die Riemenscheibe 11 in einer Lage, in der die Flansche 25 und 26 ihren kleinsten Abstand zueinander einnehmen. In dieser Position liegt der Kolben 34 vom Flansch 31 am weitesten entfernt.

Die Vorstellung der zweiten Riemenscheibe 11 geschieht wie folgt:

Da die Kolben-Innenzylindereinheit 34-36 mit der angetriebenen Welle 13 rotiert, wird das in der Kammer 38 eingeschlossene Hydraulikmedium einer Zentrifugalwirkung ausgestzt. Die rotierende Menge an Hydraulikmedium baut einen Druck auf, der mit dem radialen Abstand von der Drehachse (Längsachse der Abtriebswelle 14) quadratisch zunimmt. Der durch die Zentrifugalwirkung aufgebaute Druck übt eine Anpreßkraft auf die Stirnfläche des Kolbens 34 des axial beweglichen Flansches 26 aus. Diese Anpreßkraft ist drehzahlabhängig, und zwar ändert sie sich mit der zweiten Potenz der Drehzahl. Unterhalb einer bestimmten Grenzdrehzahl überwiegt die Vorspannkraft der Vorspanneinrichtung 23 der ersten Riemenscheibe 9. Es besteht ein festes Drehzahlverhältnis zwischen der ersten und zweiten Riemenscheibe 9 und 11, und zwar mit einer Übersetzung ins Schnelle. Wird die Grenzdrehzahl der angetriebenen Welle 13 überschritten, macht sich die Zentrifugalwirkung zunehmend bemerkbar. Das Drehzahlverhältnis zwischen der ersten und zweiten Riemenscheibe 9 und 11 ist variabel, wie dies dem Verlauf der Kennlinie A in der Abbildung entsprechend Fig. 4 zu entnehmen ist. In diesem Diagramm ist links die Verdichterdrehzahl und rechts die Drehzahl der angetriebenen Welle 13 über der Motordrehzahl schematisch dargestellt. Der Kurvenverlauf gibt die Regelcharakteristik wieder, die sich vor allem dadurch auszeichnet, daß bereits im Bereich niedriger Motordrehzahlen relativ hohe Drehzahlen der angetriebenen Welle 13 vorliegen. Diese Regelcharakteristik kommt anzutreibenden Nebenaggregaten eines Kraftfahrzeugs besonders entgegen.

Wenn der Stellweg des axial beweglichen Flansches 26 erschöpft ist, d. h., die Flansche 25 und 26 ihren kleinsten Abstand zueinander eingenommen haben, stellt sich wiederum ein festes Drehzahlverhältnis zwischen der ersten und zweiten Riemenscheibe 9 und 11 mit einer Übersetzung ins Langsame ein.

In Abbildung 4 ist eine Kennlinie B eingezeichnet, die sich ergibt, wenn der Anpreßkraft, die aus der Zentrifugalwirkung resultiert, ein zusätzlicher Stützdruck überlagert wird. Dieser Stützdruck kann z. B. von der ohnehin vorhandenen Schmiermittelpumpe 8 abgezweigt werden bzw. diesem entsprechen. Eine von der Schmiermittelpumpe 8 (vgl. Fig. 1) wegführende Leitung ist über eine Armatur 49 an das Gehäuse 29 und eine nicht dargestellte Verbindungsleitung an die Kammer 38 bzw. die Zu- und Abflußleitung 39 angeschlossen.

In Fig. 4 gibt die gestrichelt gezeichnete Linie einen linearen Drehzahlverlauf zwischen der ersten und zweiten Riemenscheibe 9 und 11 wieder, der sich bei unverändert geschlossener Riemenscheibe 11 ergibt. Durch die erfindungsgemäße Ausgestaltung der Antriebsvorrichtung 7 kann jedes beliebige Drehzahlverhältnis eingestellt werden, das in der zwischen der gestrichelten Linie und der Kurve A bzw. der Kurve B eingeschlossenen Fläche liegt. Dieses Übersetzungsverhältnis (Kurve A) der Antriebsvorrichtung 7 kann motorkennfeldabhängig eingestellt werden. Hierzu kann der Stützdruck in seinem Wert verändert werden, wenn eine Abweichung eines vorgegebenen Sollwerts des Ladedrucks vorliegt.

Der Einsatz der erfindungsgemäßen Antriebsvorrichtung 7 beschränkt sich nicht auf den Antrieb eines Ladeluftverdichters. Die Vorrichtung kann vielmehr überall dort eingesetzt werden, wo es allgemein darauf ankommt, die erläuterte, von linearen Verhältnissen abweichende Regelcharakterstik vorteilhaft einzusetzen. Dies ist insbesondere der Fall, wenn Nebenaggregate eines Kraftfahrzeugs angetrieben werden.

### Bezugszeichen

- 1: Ansaugleitung
- 2: Luftverteiler
- 3: Verbrennungsmotor
- 4: Abgassammler
- 5: Abtriebswelle
- 6: Antriebswelle
- 7: Antriebsvorrichtung
- 8: Schmierölpumpe
- 9: erste Riemenscheibe
- 10: Riemen
- 11: zweite Riemenscheibe
- 12: Kupplung
- 13: angetriebene Welle
- 14: Abtriebswelle
- 15: Hochtreiber-Planetengetriebe
- 16: Sonnenradwelle
- 17: Kreiselverdichter
- 18: Luftmengenmesser
- 19: -
- 20: Drosselklappe
- 21: Luftfilter
- 22: Flansch
- 23: Vorspanneinrichtung
- 24: Flansch
- 25: Flansch
- 26: Flansch
- 27: Schrauben
- 28: Innenraum
- 29: Gehäuse
- 30: Vorratsbehälter
- 31: Flansch
- 32: Schrauben
- 33: Rand
- 34: Kolben
- 35: Innenzylinder
- 36: Dichtring
- 37: Dicht- und Gleitring
- 38: Kammer
- 39: Zu- und Abflußleitung
- 40: Boden
- 41: Kanal
- 42: -
- 43: -
- 44: Zylinderkörper
- 45: Halbrundnuten
- 46: Halbrundnuten
- 47: Drehteil
- 48: Anschlußstück
- 49: Armatur

## Patentansprüche

1. Antriebsvorrichtung (7) zur Übertragung von Drehmoment zwischen einer Antriebswelle (6) mit einer ersten Riemenscheibe (9) und einer angetriebenen Welle (13) mit einer zweiten Riemenscheibe (11), wobei die erste Riemenscheibe (9) einen axial feststehenden, mit der Antriebswelle (6) drehfest verbundenen Flansch (22) und einen axial beweglichen unter der Wirkung einer Vorspanneinrichtung (23) stehenden Flansch (24) aufweist und die zweite Riemenscheibe (11) aus einem axial feststehenden mit der angetriebenen Welle (13) drehfest verbundenen Flansch (25) und einem axial beweglichen Flansch (26) besteht, wobei der axial bewegliche Flansch (26) mit einem Flansch (31) der angetriebenen Welle (13) eine Kammer (38) bildet, die an einen Vorratsbehälter (30) eines Hydraulikmediums angeschlossen ist und mit einem Stützdruck, der in Abhängigkeit eines Kennfeldes eines Verbrennungsmotors (3) regelbar ist, beaufschlagbar ist, dadurch **gekennzeichnet**, daß die kennfeldabhängige Motordrehzahl und/oder der Ladedruck des Verbrennungsmotors (3) überwacht, und das dieser Drehzahl und/oder diesem Druck entsprechende Übersetzungsverhältnis der Antriebsvorrichtung (7) neben der Veränderung der Zentrifugalwirkung des Hydraulikmediums durch Änderung, Zu- und Abschalten des Stützdrucks variiert wird.

2. Antriebsvorrichtung nach dem Anspruch 1, dadurch **gekennzeichnet**, daß der Stützdruck vom Förderdruck einer Schmiermittelpumpe (8) abgeleitet ist bzw. diesem entspricht.

3. Antriebsvorrichtung nach Anspruch 1, dadurch **gekennzeichnet**, daß ein Kolben (34) des axial beweglichen Flansches (26) in einem Innenzylinder (35) des Flansches (31) der angetriebenen Welle (13) gleitend und dicht geführt ist.

4. Antriebsvorrichtung nach den Ansprüchen 1 und 3, dadurch **gekennzeichnet,** daß im axial beweglichen Flansch (26) und dem Flansch (31) der angetriebenen Welle (13) Halbrundnuten (45, 46) vorgesehen sind, die sich mit ihren axial gerichteten Öffnungen diametral gegenüberliegen und in die Zylinderkörper (44) eingesetzt sind, um eine drehfeste Verbindung zwischen dem axial beweglichen Flansch (26) und dem Flansch (31) der angetriebenen Welle (13) herzustellen.

5. Antriebsvorrichtung nach den Ansprüchen 1 sowie 3 und 4, dadurch **gekennzeichnet,** daß die angetriebene Welle (13) eine Hohlwelle ist, die mit einer Abtriebswelle (14) unmittelbar oder mittelbar über eine schaltbare Kupplung (12) drehfest verbunden ist.

6. Antriebsvorrichtung nach Anspruch 5, dadurch **gekennzeichnet,** daß ein Boden (40), der mit einer Außendichtung an der Hohlwelle (Welle 13) anliegt, eine Begrenzungswand der Kammer (38) bildet.

7. Antriebsvorrichtung nach Anspruch 5, dadurch **gekennzeichnet,** daß die Abtriebswelle (14) ein Nebenaggregat eines Kraftfahrzeugs, insbesondere einen Kreiselverdichter (17) für einen Verbrennungsmotor (3) antreibt.

8. Antriebsvorrichtung nach Anspruch 3, dadurch **gekennzeichnet,** daß der axial bewegliche Flansch (26) in einer Endlage an einem Anschlag des Flansches (31) der angetriebenen Welle (13) anliegt.

9. Antriebsvorrichtung nach den Ansprüchen 1 bis 3 und 5, dadurch **gekennzeichnet**, daß das Hydraulikmedium über eine Bohrung (39) der Abtriebswelle (14) der Kammer (38) zugeführt wird bzw. aus dieser abfließt.

10. Antriebsvorrichtung nach den Ansprüchen 1 bis 3 und 5, dadurch **gekennzeichnet,** daß das Hydraulikmedium über eine ortsfeste, konzentrisch zum Flansch (31) der angetriebenen Welle (13) angeordnete Leitung (39 in 48) der Kammer (38) zugeführt wird bzw. aus dieser abfließt.

11. Antriebsvorrichtung nach Anspruch 1, dadurch **gekennzeichnet,** daß der Flansch (31) der angetriebenen Welle als Antriebsscheibe für ein weiteres Nebenaggregat, insbesondere einen Klimakompressor, ausgebildet ist.

12. Antriebsvorrichtung nach Anspruch 4, dadurch **gekennzeichnet,** daß die Halbrundnuten (46) in einem gesonderten Drehteil (47) angeordnet sind.

## Claims

1. Drive device (7) for the transmission of torque between a drive shaft (6) having a first belt pulley (9) and a driven shaft (13) having a second belt pulley (11), wherein the first belt pulley (9) has an axially fixed flange (22) connected non-rotatably to the drive shaft (6) and an axially movable flange (24) subject to the action of a prestressing device (23) and the second belt pulley (11) comprises an axially fixed flange (25) connected non-rotatably to the driven shaft (13) and an axially movable flange (26), the axially movable flange (26) forming with a flange (31) of the driven shaft (13) a chamber (38), which is connected to a storage container (30) of a hydraulic medium and may be acted upon by a back-up pressure controllable in dependence upon a characteristic map of an i.c. engine (3), characterized in that the characteristic map-dependent engine speed and/or the boost pressure of the i.c. engine (3) is monitored, and the transmission ratio of the drive device (7) corresponding to said speed and/or pressure is varied by, in addition to varying the centrifugal action of the hydraulic medium, varying, connecting or disconnecting the back-up pressure.

2. Drive device according to claim 1, characterized in that the back-up pressure is diverted from or corresponds to the delivery pressure of a lubricant pump (8).

3. Drive device according to claim 1, characterized in that a piston (34) of the axially movable flange (26) is guided slidingly and tightly in an internal cylinder (35) of the flange (31) of the driven shaft (13).

4. Drive device according to claims 1 and 3, characterized in that provided in the axially movable flange (26) and the flange (31) of the driven shaft (13) are semicircular grooves (45, 46), which lie with their axially directed openings diametrically opposed and into which cylindrical elements (44) are inserted in order to establish a non-rotatable connection between the axially movable flange (26) and the flange (31) of the driven shaft (13).

5. Drive device according to claims 1 and 3 and 4, characterized in that the driven shaft (13) is a hollow shaft which is non-rotatably connected to an output shaft (14) directly or indirectly via a clutch (12).

6. Drive device according to claim 5, characterized in that a base (40), which lies with an external seal against the hollow shaft (shaft 13), forms a boundary wall of the chamber (38).

7. Drive device according to claim 5, characterized in that the output shaft (14) drives an auxiliary unit of a motor vehicle, in particular a centrifugal compressor (17) for an i.c. engine (3).

8. Drive device according to claim 3, characterized in that the axially movable flange (26) in one end position rests against a stop of the flange (31) of the driven shaft (13).

9. Drive device according to claims 1 to 3 and 5, characterized in that the hydraulic medium is supplied to the chamber (38) and flows off from said chamber via a bore (39) of the output shaft (14).

10. Drive device according to claims 1 to 3 and 5, characterized in that the hydraulic medium is supplied to the chamber (38) and flows off from said chamber via a stationary line (39 in 48) disposed concentrically to the flange (31) of the driven shaft (13).

11. Drive device according to claim 1, characterized in that the flange (31) of the driven shaft takes the form of a driving pulley for a further auxiliary unit, in particular an air conditioning compressor.

12. Drive device according to claim 4, characterized in that the semicircular grooves (46) are disposed in a separate turned part (47).

## Revendications

1. Dispositif d'entraînement (7) pour transmettre un couple entre un arbre entraîneur (6) pourvu d'une première poulie (9) et un arbre entraîné (13) pourvu d'une seconde poulie (11), où la première poulie (9) comporte un flasque fixe axialement (22), lié en rotation à l'arbre entraîneur (6), et un flasque (24) mobile axialement sous l'effet d'un organe de précontrainte (23), et la seconde poulie (11) comporte un flasque fixe axialement (25), lié en rotation à l'arbre entraîné (13), et un flasque mobile axialement (26), où le flasque mobile axialement (26) forme avec un flasque 31 de l'arbre entraîné (13) une chambre (38) qui est raccordée à un réservoir (30) d'un fluide hydraulique et peut être soumise à une pression d'assistance qui est réglable en fonction d'un champ caractéristique d'un moteur à combustion interne (3), **caractérisé** en ce que la vitesse du moteur liée au champ caractéristique et/ou la pression de suralimentation du moteur à combustion interne (3) sont surveillées et en ce que le rapport de transmission du dispositif d'entraînement (7) qui correspond à ladite vitesse et/ou à ladite pression est modifié par variation, enclenchement et déclenchement de la pression d'assistance, en plus de la variation de l'action centrifuge du fluide hydraulique.

2. Dispositif selon la revendication 1, **caractérisé** en ce que la pression d'assistance est dérivée de, ou correspond à, la pression de refoulement d'une pompe de lubrifiant (8).

3. Dispositif selon la revendication 1, **caractérisé** en ce qu'un piston (34) du flasque mobile axialement (26) est monté de manière coulissante et étanche dans un cylindre intérieur (35) du flasque (31) de l'arbre entraîné (13).

4. Dispositif selon les revendications 1 et 3, **caractérisé** en ce que, dans le flasque mobile axialement (26) et le flasque (31) de l'arbre entraîné (13), il est prévu des rainures demi-rondes (45, 46) qui se trouvent diamétralement l'une en face de l'autre, leurs ouvertures étant dirigées axialement, et dans lesquelles sont insérés des corps cylindriques (44) pour assurer une liaison de rotation entre le flasque mobile axialement (26) et le flasque (31) de l'arbre entraîné (13).

5. Dispositif selon la revendication 1 ainsi que 3 et 4, **caractérisé** en ce que l'arbre entraîné (13) est un arbre creux qui est lié en rotation, directement ou indirectement, par un embrayage commandé (12), à un arbre de sortie (14).

6. Dispositif selon la revendication 5, **caractérisé** en ce qu'un fond (40), appliqué contre l'arbre creux (arbre 13) par un joint d'étanchéité extérieur, forme une paroi de séparation de ladite chambre (38).

7. Dispositif selon la revendication 5, **caractérisé** en ce que l'arbre de sortie (14) entraîne un organe secondaire d'un véhicule à moteur, notamment un compresseur centrifuge (17) pour un moteur à combustion interne (3).

8. Dispositif selon la revendication 3, **caractérisé** en ce que le flasque mobile axialement (26) s'appuie dans une position de fin de course contre une butée du flasque (31) de l'arbre entraîné (13).

9. Dispositif selon les revendications 1 à 3 et 5, **caractérisé** en ce que le fluide hydraulique est amené à ladite chambre (38), ou s'en échappe, à travers un alésage (39) de l'arbre de sortie (14).

10. Dispositif selon les revendications 1 à 3 et 5, **caractérisé** en ce que le fluide hydraulique est amené à ladite chambre (38), ou s'en échappe, par un conduit fixe (39 dans 48) disposé concentriquement dans le flasque (31) de l'arbre entraîné (13).

11. Dispositif selon la revendication 1, **caractérisé** en ce que le flasque (31) de l'arbre entraîné est agencé en poulie pour l'entraînement d'un autre organe secondaire, notamment d'un compresseur de climatisation.

12. Dispositif selon la revendication 4, **caractérisé** en ce que les rainures demi-rondes (46) sont ménagées dans une pièce tournée séparée (47).
